(19) Europäisches Patentamt
European Patent Office
Office européen des brevets

(11) **EP 2 591 638 B1**

(12) **EUROPÄISCHE PATENTSCHRIFT**

(45) Veröffentlichungstag und Bekanntmachung des Hinweises auf die Patenterteilung:
**19.10.2016  Patentblatt 2016/42**

(21) Anmeldenummer: **11738180.6**

(22) Anmeldetag: **06.07.2011**

(51) Int Cl.:
*H05B 3/84* (2006.01)        *H05B 3/86* (2006.01)
*B60S 1/02* (2006.01)

(86) Internationale Anmeldenummer:
**PCT/EP2011/061351**

(87) Internationale Veröffentlichungsnummer:
**WO 2012/004280 (12.01.2012 Gazette 2012/02)**

(54) **VERBUNDSCHEIBE MIT EINER ELEKTRISCH BEHEIZBAREN BESCHICHTUNG**

COMPOSITE PANE HAVING AN ELECTRICALLY HEATABLE COATING

VITRAGE EN VERRE FEUILLETÉ AVEC UN REVÊTEMENT POUVANT ÊTRE CHAUFFÉ ÉLECTRIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2010  EP 10168773**

(43) Veröffentlichungstag der Anmeldung:
**15.05.2013  Patentblatt 2013/20**

(73) Patentinhaber: **Saint-Gobain Glass France**
**92400 Courbevoie (FR)**

(72) Erfinder:
• **OFFERMANN, Volkmar**
  **52249 Eschweiler (DE)**

• **SCHLARB, Andreas**
  **52134 Herzogenrath (DE)**
• **MELCHER, Martin**
  **52134 Herzogenrath (DE)**
• **LISINSKI, Susanne**
  **50739 Köln (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**WO-A1-03/105533        DE-A1- 19 860 870**
**DE-A1-102004 029 164    US-A1- 2007 045 282**

EP 2 591 638 B1

**Beschreibung**

Die Erfindung betrifft eine Verbundscheibe mit einer elektrisch beheizbaren Beschichtung, insbesondere eine elektrisch beheizbare Fahrzeugscheibe. Die Erfindung betrifft außerdem die Verwendung der erfindungsgemäßen Verbundscheibe als Fahrzeugscheibe, insbesondere als Fahrzeugscheibe für Elektrofahrzeuge.

Als Elektrofahrzeuge bezeichnet man Kraftfahrzeuge, die durch elektrische Energie angetrieben werden. Die Antriebsenergie wird meist in Form von aufladbaren Akkumulatoren und wiederaufladbaren Batterien im Fahrzeug mitgeführt oder durch Brennstoffzellen im Fahrzeug selbst erzeugt. Ein Elektromotor wandelt die elektrische Energie in mechanische Energie zur Fortbewegung. Die Bordspannung von Elektrofahrzeugen beträgt typischerweise von 100 V bis 400 V.

Aufgrund der begrenzten Energiespeicherdichte von Akkumulatoren oder wiederaufladbaren Batterien ist die Reichweite von Elektrofahrzeugen stark begrenzt. Der effiziente Einsatz von elektrischer Energie ist deshalb bei Elektrofahrzeugen von besonderer Bedeutung.

An die Verglasung von Elektrofahrzeugen werden die gleichen Anforderungen gestellt wie an die Verglasung von Kraftfahrzeugen mit Verbrennungsmotor. Hinsichtlich der Größe des Sichtbereichs und der strukturellen Stabilität der Scheiben gelten folgende gesetzlichen Vorschriften:

- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, Nr. 29 "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Das Sichtfeld einer Fahrzeugscheibe muss frei von Eis und Beschlag gehalten werden. Bei Kraftfahrzeugen mit Verbrennungsmotor wird in der Regel Motorwärme verwendet, um einen Luftstrom zu erwärmen. Der warme Luftstrom wird dann auf die Scheiben gelenkt. Bei Elektrofahrzeugen ist diese Methode ungeeignet, da Elektrofahrzeuge nicht über Motorwärme verfügen. Die Erzeugung von warmer Luft aus elektrischer Energie ist wenig effizient.

Alternativ kann die Scheibe eine elektrische Heizfunktion aufweisen. DE 103 52 464 A1 offenbart eine Verbundglasscheibe mit zwei Glasscheiben. Zwischen den Glasscheiben sind parallel zueinander verlaufende Drähte eingelegt. Wird eine Spannung an die Drähte angelegt, fließt ein elektrischer Strom. Die Glasscheibe wird durch die Joulsche Wärmeentwicklung des stromdurchflossenen Widerstands beheizt. Aufgrund von Design- und Sicherheitsaspekten muss die Anzahl der Drähte in dem Glas sowie der Durchmesser der Drähte so klein wie möglich gehalten werden. Die Drähte dürfen bei Tageslicht und nachts bei Scheinwerferlicht visuell nicht oder kaum wahrnehmbar sein.

Besser geeignet sind transparente, elektrisch leitfähige Beschichtungen, wie sie aus DE 103 33 618 B3 bekannt sind. Dort weist eine Glasscheibe eine elektrisch beheizbare Silberschicht auf. Beschichtungen auf der Basis von dünnen Silberschichten sind kostengünstig herstellbar und alterungsstabil. Die Schichten weisen in der Regel Flächenwiderstände im Bereich von 1 Ohm/Quadrat bis 5 Ohm/Quadrat auf. Der Gesamtwiderstand einer Kraftfahrzeug-Windschutzscheibe für den Betrieb bei einer Spannung von 42 V beträgt je nach Lage der elektrischen Anschlüsse und Heizleistung etwa 2 Ohm bis 4 Ohm. Beschichtungen mit Widerständen in diesem Bereich sind nicht für Betriebspannungen von über 100 V geeignet. Das Herabsetzen von Betriebsspannungen von mehr als 100 V auf 42 V oder 14 V, beispielsweise durch ein Netzteil, ist wenig energieeffizient.

Der Widerstand der transparenten, elektrisch leitfähigen Beschichtung muss so gewählt sein, dass die Verbundscheibe nicht durch Überhitzung beschädigt wird. Außerdem darf keine Gefahr für Verbrennungen beim Berühren der erwärmten Glasscheibe mit der bloßen Haut bestehen. Die Beschichtung muss insbesondere so dimensioniert werden, dass bei angelegter Betriebsspannung nach einer Zeitdauer von 30 min. keine Stelle der Verbundscheibe eine Temperatur > 75°C aufweist.

Die Aufgabe der vorliegenden Erfindung besteht darin, eine Verbundscheibe mit einer transparenten, elektrisch leitfähigen Beschichtung bereitzustellen, die für eine Betriebsspannung von 100 V bis 400 V geeignet ist und eine Heizleistung von 300 W/m$^2$ bis 1000 W/m$^2$ aufweist. Die beheizbare Beschichtung soll dabei kostengünstig herstellbar und alterungsbeständig sein.

Die internationale Patentanmeldung WO/105533 A1 und die deut-sche Patentanmeldung DE 10 2004 029164 A1 zeigen jeweils eine Verglasung mit einer Mehrzahl von Strompfaden, die sich jeweils zwischen zwei Busbars erstrecken und durch Einschnitte die Richtung wechseln. In direkter Sicht zwischen den zwei Busbars eines Strompfads befindet sich jeweils nur 1 Einschnitt. Die Betriebsspannung der Verglasung muss somit zwangsläufig geringer sein als die Durchbruchsspannung des Einschnitts.

Die Aufgabe der vorliegenden Erfindung wird erfindungsgemäß durch eine Verbundscheibe mit einer elektrisch beheizbaren Beschichtung gemäß Anspruch 1 gelöst. Bevorzugte Ausführungen gehen aus den Unteransprüchen hervor. Eine Verwendung der Verbundscheibe geht aus weiteren Ansprüchen hervor.

Die erfindungsgemäße Verbundscheibe enthält mindestens zwei Scheiben, die mit mindestens einer Zwischenschicht miteinander verbunden sind. Als Scheiben sind im Grunde alle transparenten, elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Scheiben enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Beispiele geeigneter Gläser sind aus der deutschen Übersetzung des europäischen Patent EP 0 847 965 B1 mit dem Aktenzeichen DE 697 31 268 T2, Seite 8, Absatz [0053], bekannt. In einer bevorzugten Ausführungsform der erfindungsgemäßen Verbundscheibe enthält mindestens eine der Scheiben Glas und mindestens eine der Scheiben enthält Kunststoff. Insbesondere bei einer erfindungsgemäßen Verwendung als Fahrzeugscheibe enthält die außenliegende Scheibe Glas und die innenliegende Scheibe Kunststoff.

Die Dicke der Scheiben kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheiben kann breit variieren und richtet sich nach der Größe der erfindungsgemäßen Verwendung. Die Scheiben können eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Die Scheiben werden durch Zwischenschichten miteinander verbunden. Die Zwischenschichten enthalten vorzugsweise thermoplastische Kunststoffe, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Mindestens eine der einzelnen Scheiben der erfindungsgemäßen Verbundscheibe ist auf einer Innenseite mit einer transparenten, elektrisch leitfähigen Beschichtung beschichtet. Innenseite bedeutet hier jede einer Zwischenschicht zugewandte Seite. Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen entspricht und insbesondere für sichtbares Licht bevorzugt >70% und insbesondere >80% ist. Solche Beschichtungen sind aus DE 20 2008 017 611 U1 und EP 0 847 965 B1 bekannt. Sie bestehen in der Regel aus einer Metallschicht wie einer Silberschicht oder silberhaltige Metalllegierung, die zwischen mindestens zwei Beschichtungen aus dielektrischem Material vom Typ Metalloxid eingebettet ist. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten. Bevorzugt werden Metallschichtsysteme mit mehreren Metallschichten verwendet, wobei die einzelnen Metallschichten durch mindestens eine Schicht aus dielektrischem Material getrennt sind. Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz-und Getterschicht, um eine Veränderung des Silbers während der weiteren Prozessschritte zu verhindern.

Die Dicke der transparenten, elektrisch leitfähigen Beschichtung kann breit variieren und den Erfordernissen des Einzelfalls angepasst werden. Wesentlich ist dabei, dass die Dicke der elektrisch leitfähigen, transparenten Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird. Die erfindungsgemäß verwendeten Silberschichtsysteme haben einen Flächenwiderstand von 1 Ohm/Quadrat bis 10 Ohm/Quadrat, bevorzugt von 3 Ohm/Quadrat bis 5 Ohm/Quadrat.

Bei einer vorteilhaften Ausgestaltung der erfindungsgemäßen Verbundscheibe befindet sich mindestens eine transparente, elektrisch leitfähige Schicht auf mindestens einer der Innenseiten der Scheiben. Innenseite der Scheibe bedeutet hier jede der thermoplastischen Zwischenschicht zugewandte Seite. Im Falle eines Scheibenverbundes aus zwei Scheiben kann sich eine transparente, elektrisch leitfähige Schicht auf der Innenseite der einen oder der anderen Scheiben befinden. Alternativ kann sich auch jeweils eine transparente, elektrisch leitfähige Schicht auf jeder der beiden Innenseiten befinden. Im Falle eines Scheibenverbunds aus mehr als zwei Scheiben können sich auch mehrere transparente, elektrisch leitfähige Schichten auf mehreren Innenseiten der Scheiben befinden. Alternativ kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die transparente, elektrisch leitfähige Beschichtung ist mit insbesondere streifen- bzw. bandförmigen Sammelleitern, so genannten Bus Bars, zur Übertragung elektrischer Leistung verbunden. Beispiele geeigneter Sammelleiter sind aus DE 103 33 618 B3 und EP 0 025 755 B1 bekannt. Die Sammelleiter dienen zum breit verteilten Einleiten des Heizstroms in die Beschichtung. Die Sammelleiter werden durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt insbesondere von 5 $\mu$m bis 20 $\mu$m.

In einer alternativen Ausgestaltung der erfindungsgemäßen Sammelleiter werden dünne und schmale Metallfolienstreifen oder Metalldrähte als Sammelleiter verwendet, die bevorzugt Kupfer und/oder Aluminium enthalten, insbesondere werden Kupferfolienstreifen mit einer Dicke von 50 $\mu$m verwendet. Die Breite der Kupferfolienstreifen beträgt bevorzugt 1 mm bis 10 mm. Die Metallfolienstreifen oder Metalldrähte werden beim Zusammenlegen der Verbundschichten auf die Beschichtung aufgelegt. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann aber auch durch Auflöten oder Kleben mit einem elektrisch leitfähigen Kleber hergestellt werden.

Die erfindungsgemäße Verbundscheibe umfasst insbesondere mindestens zwei Sammelleiter, die mit der transparenten, elektrisch leitfähigen Beschichtung verbunden sind, wobei ein erster Sammelleiter mit einer zur Verbindung mit dem einen Pol einer Spannungsquelle vorgesehenen ersten Zuleitung und ein zweiter Sammelleiter mit einer zur Verbindung mit dem anderen Pol der Spannungsquelle vorgesehenen zweiten Zuleitung elektrisch verbunden ist. Des Weiteren kann die Verbundscheibe weitere Sammelleiter ohne Zuleitung umfassen.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben. Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Gold, Silber oder Zinn und Legierungen davon. Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden. Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Klebeschicht eingebettet werden. Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybän, Rhenium, Osmium, Iridium, Palladium oder Platin enthalten. Die Zuleitungen sind aus der Verbundscheibe herausgeführt und sind bevorzugt über eine Steuerungselektrik mit der die Betriebsspannung bereitstellenden Spannungsquelle verbunden.

Die erfindungsgemäße transparente, elektrisch leitfähige Beschichtung weist Einschnitte auf, die die Beschichtung in zumindest abschnittsweise voneinander elektrisch isolierte Bereiche trennt. Die Einschnitte können die Beschichtung insbesondere in voneinander vollständig elektrisch isolierte Bereiche trennen. Die voneinander vollständig elektrisch isolierten Bereiche sind durch Sammelleiter ohne Zuleitung seriell (in Reihe) oder parallel elektrisch miteinander verbunden. Alternativ oder in Kombination dazu können die Einschnitte die Beschichtung nur abschnittsweise unterteilen, so dass die Beschichtungsbereiche zusammenhängen. Dies hat zur Folge, dass der Strom mäanderförmig durch die Beschichtung fließt. Dadurch wird der Strompfad durch die Beschichtung verlängert und der Gesamtwiderstand der Beschichtung erhöht.

In der erfindungsgemäßen Verbundscheibe sind die Einschnitte so angeordnet und ausgebildet, dass die Beschichtung einen solchen elektrischen Widerstand hat, dass bei einer Betriebsspannung im Bereich von mehr als 100 V bis 400 V eine Heizleistung von 300 W/m² bis 1000 W/m² erzeugt werden kann. Die genaue Anzahl, Lage und Länge der Einschnitte zur Erzielung eines gewünschten Gesamtwiderstandes kann durch einfache Versuche oder Simulationen ermittelt werden. Die insbesondere linienförmigen Einschnitte werden bevorzugt so gestaltet, dass die Durchsicht durch die Verbundscheibe nur wenig bzw. nicht beeinträchtigt wird und sich eine möglichst homogene Verteilung der Heizleistung ergibt. Zu diesem Zweck haben die Einschnitte eine möglichst geringe Breite (Abmessung senkrecht zur Erstreckung).

In einer ersten Näherung ergibt sich die Länge des Strompfades I aus:

$$l = \sqrt{\frac{U^2}{P_{spez} \cdot R_{Quadrat}}}$$

wobei U die Betriebsspannung, $P_{spez}$ die spezifische Heizleistung und $R_{Quadrat}$ der Flächenwiderstand der transparenten, elektrisch leitfähigen Beschichtung ist. Aus dem Quotienten der Länge des Strompfades I und der Breite der Scheibe d ergibt sich näherungsweise die Anzahl der in Reihe geschalteten, elektrisch voneinander isolierten Beschichtungsbereiche. Anhand des gemessenen Widerstandes lässt sich durch einfache geometrische Änderungen der gewünschte Gesamtwiderstand einstellen.

Die Einschnitte in die transparente, elektrisch leitfähige Beschichtung erfolgen bevorzugt mittels eines Lasers. Verfahren zum Strukturieren dünner Metallfilme sind beispielsweise aus EP 2 200 097 A1 oder EP 2 139 049 A1 bekannt. Alternativ können die Einschnitte durch mechanisches Abtragen sowie durch chemisches oder physikalisches Ätzen erfolgen. Die Breite der Einschnitte ist an die zu isolierende Spannung anzupassen und liegt bevorzugt bei 10 µm bis 500 µm, insbesondere bei 50 µm bis 100 µm, beispielsweise 80 µm, oder bei 30 µm bis 50 µm. Denkbar ist jedoch auch, dass die Breite weniger als 30 µm beträgt. Bei geringen Breiten unterhalb von 80 µm, insbesondere unterhalb von 50 µm kann in besonders vorteilhafter Weise eine insbesondere bei silberhaltigen Sammelleitern wahrnehmbare leichte Gelbfärbung der Verbundscheibe im Bereich der Einschnitte vermieden werden. Eine solche Gelbfärbung ist vor allem in Reflexion wahrnehmbar.

Wesentlich hierbei ist, dass im Bereich eines kürzesten geometrischen Abstands zwischen dem ersten Sammelleiter und dem zweiten Sammelleiter (d.h. jenen Sammelleitern, die mit den Zuleitungen verbunden sind und somit eine größte Potenzialdifferenz aufweisen) befindlicher Beschichtungsabschnitt der elektrisch leitfähigen Beschichtung durch eine Mehrzahl solcher Einschnitte elektrisch unterbrochen ist, wobei die Zahl der Einschnitte in Abhängigkeit der Größe der vorgesehenen Betriebsspannung so gewählt ist, dass ein Spannungsabfall über einen einzelnen Einschnitt, durch den zwei einander benachbarte Beschichtungsbereiche elektrisch voneinander getrennt sind, geringer ist als eine Durchbruchsspannung des Einschnitts. Durch diese Maßnahme kann in besonders vorteilhafter Weise erreicht werden, dass die Breite der Einschnitte vergleichsweise gering sein kann, ohne dass die Gefahr eines Durchschlagens bei der angelegten hohen Betriebsspannung besteht. Falls über einen einzelnen Einschnitt die vollständige Betriebsspannung abfallen würde, hätte dies zur Folge, dass der Einschnitt zum Erzielen einer ausreichend hohen Durchbruchsspannung entsprechend breit ausgeführt sein müsste, wodurch jedoch bei den üblichen Materialien die optisch-ästhetische Erscheinung der Verbundscheibe nachteilig beeinträchtigt wäre. Im Unterschied hierzu erlaubt die erfindungsgemäße Verbundscheibe eine erhebliche Verringerung der Breite der Einschnitte, da jeweils nur ein Teil der Betriebsspannung zwischen den einander benachbarten Beschichtungsbereichen abfällt. Erfindungsgemäß haben die Einschnitte jeweils eine solche (geringe) Breite, dass die vorgesehene Betriebsspannung größer als deren elektrische Durchbruchsspannung ist, so dass ohne die erfindungsgemäße Maßnahme ein Durchbruch des Einschnitts wahrscheinlich ist. Bei der erfindungsgemäßen Verbundscheibe kann auf Grund der geringen Schichtdicke der leitfähigen Beschichtung nicht nur ein plötzlicher (schlagartiger) elektrischer Durchbruch an den Einschnitten auftreten, sondern auch ein elektrischer Durchbruch infolge Elektromigration bei den angelegte hohen Betriebspannungen. Hierbei handelt es sich um den Effekt, dass Atome der Beschichtung durch die angelegte Spannung in den elektrisch isolierenden Spalt wandern können, wodurch schließlich im Laufe eines beispielsweise Monate oder Jahre dauernden Prozesses ein (schleichender) elektrischer Durchbruch erfolgen kann. Erfindungsgemäß soll auch dieser Effekt umfasst sein.

Die erfindungsgemäße Verbundscheibe bietet somit einerseits den Vorteil, dass durch die Einschnitte der Widerstand der Beschichtung so eingestellt werden kann, dass bei einer hohen Betriebsspannung im Bereich von mehr als 100 V bis 400 V eine geeignete Heizleistung im Bereich von 300 W/m² bis 1000 W/m² erreicht werden kann. Andererseits können die Einschnitte so angeordnet werden, dass in direkter Linie (Verbindung) zwischen den mit der Betriebsspannung beaufschlagten Sammelleitern wenigstens zwei Einschnitte liegen, so dass ein Durchschlagen der Einschnitte bei der hohen Betriebsspannung zuverlässig und sicher vermieden werden kann, mit der Folge, dass die Einschnitte eine relativ geringe Breite haben können und die optisch-ästhetische Erscheinung der Verbundscheibe nicht stören. Die erfindungsgemäße Verbundscheibe ermöglicht somit erstmals bei den hohen Betriebsspannungen von Elektrofahrzeugen für die praktische Anwendung geeignete Heizleistungen zu erzeugen, ohne hierbei die optisch-ästhetische Erscheinung in nachteiliger Weise zu beeinträchtigen. Vorzugsweise ist die erfindungsgemäße Verbundscheibe zur Verwendung bei Betriebsspannungen im Bereich von 280 V bis 400 V ausgelegt.

In einer bevorzugten Ausgestaltung der erfindungsgemäßen Verbundscheibe erstreckt sich die transparente, elektrisch leitfähige Beschichtung auf mindestens 90 % der Fläche der Seite der Scheibe, auf die sie aufgebracht ist. Die transparente, elektrisch leitfähige Beschichtung erstreckt sich bevorzugt über die gesamte Fläche der Seite der Scheibe, auf die sie aufgebracht ist, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich kann die transparente, elektrisch leitfähige Beschichtung in einem weiteren Bereich entschichtet sein, der als Datenübertragungsfenster oder Kommunikationsfenster dient.

In einer vorteilhaften Ausgestaltung der erfindungsgemäßen Verbundscheibe sind die Einschnitte so ausgeführt, dass sie die transparente, elektrisch leitfähige Beschichtung in mindestens drei (vollständig) elektrisch voneinander isolierte Bereiche trennt. Benachbarte Beschichtungsbereiche sind jeweils durch einen dritten Sammelleiter (d.h. Sammelleiter ohne Zuleitung) elektrisch miteinander verbunden. Durch die Trennung der Bereiche und deren Verbindung durch die Sammelleiter ergibt sich eine Verlängerung des Strompfades durch die transparente, elektrisch leitfähige Beschichtung. Aus der Verlängerung des Strompfades folgt eine Erhöhung des elektrischen Widerstandes, der in geeigneter Weise zur Erreichen der gewünschten Heizleistung eingestellt werden kann.

In einer weiteren vorteilhaften Ausgestaltung der erfindungsgemäßen Verbundscheibe sind die Sammelleiter an den in Einbaulage vertikalen Rändern der Verbundscheibe ausgeführt. Die Sammelleiter verlaufen insbesondere parallel zu den so genannten A-Holmen (A-Säulen)der Fahrzeugkarosserie.

In einer vorteilhaften Ausgestaltung der erfindungsgemäßen Verbundscheibe sind die Sammelleiter, die mit den Zuleitungen verbunden sind, am Rand einer Seite der Verbundscheibe angeordnet. Über die Zuleitungen wird die Betriebsspannung an die transparente, elektrisch leitfähige Beschichtung angelegt. In einer bevorzugten Ausgestaltung befinden sich die Sammelleiter, die mit den Zuleitungen verbunden sind, direkt benachbart am Rand einer Seite der Verbundscheibe. In einer alternativen bevorzugten Ausgestaltung werden die Zuleitungen im Innern der erfindungsgemäßen Verbundscheibe zusammengeführt und bevorzugt nebeneinander aus der Verbundscheibe herausgeführt. Die elektrischen Anschlüsse der Verbundscheibe können über ein Steckelement oder eine zweiadrige Leitung an die Fahrzeugelektrik angeschlossen werden. Die Kontaktierung mit einem Steckelement vereinfacht die Montage der Verbundscheibe in die Fahrzeugkarosserie.

Die Erfindung erstreckt sich weiterhin auf eine Anordnung welche eine wie oben beschriebene Verbundscheibe sowie eine Spannungsquelle zum Bereitstellen der Betriebsspannung umfasst.

Die Erfindung umfasst weiter die Verwendung der erfindungsgemäßen Verbundscheibe in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe. Die erfindungsgemäße Verbundscheibe wird bevorzugt als Fahrzeugscheibe in Fortbewegungsmitteln mit einer Bordspannung von 100 V bis 400 V verwendet. Die erfindungsgemäße Verbundscheibe wird weiter bevorzugt verwendet als Fahrzeugscheibe in Kraftfahrzeugen, die durch Umwandlung elektrischer Energie angetrieben werden, insbesondere in Elektrofahrzeugen. Die elektrische Energie wird aus Akkumulatoren, wiederaufladbaren Batterien, Brennstoffzellen oder verbrennungsmotorgetriebenen Generatoren bezogen. Weiter wird die erfindungsgemäße Verbundscheibe verwendet als Fahrzeugscheibe in Hybridelektrofahrzeugen, die neben der Umwandlung elektrischer Energie durch Umwandlung einer weiteren Energieform angetrieben werden. Die weitere Energieform ist bevorzugt ein Verbrennungsmotor, insbesondere ein Dieselmotor.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nun anhand von Ausführungsbeispielen näher erläutert, wobei Bezug auf die beigefügten Figuren genommen wird. Es zeigen in vereinfachter, nicht maßstäblicher Darstellung:

Fig. 1     eine erfindungsgemäß ausgebildete Verbundscheibe 1 in Form einer Kraftfahrzeug-Windschutzscheibe in einer Draufsicht auf die innere Scheibe 1.2 der Verbundscheibe 1;

Fig. 2     eine Querschnittszeichnung entlang der Linie A-A' aus Figur 1 durch eine erfindungsgemäß ausgebildete Verbundscheibe 1;

Fig. 3     eine Querschnittszeichnung entlang der Linie B-B' aus Fig. 1 durch eine erfindungsgemäß ausgebildete Verbundscheibe 1 mit einem Einschnitt 4.1 in der transparenten, elektrisch leitfähigen Beschichtung 2,

Fig. 4     eine Querschnittszeichnung entlang der Linie C-C' aus Fig. 1 durch eine erfindungsgemäß ausgebildete Verbundscheibe 1 mit einem Einschnitt 4.1 in der transparenten, elektrisch leitfähigen Beschichtung 2 im Bereich eines Sammelleiters 3.3;

Fig. 5     eine Draufsicht auf eine alternative Ausführung der erfindungsgemäß ausgebildeten Verbundscheibe 1; und

Fig. 6    eine Draufsicht auf eine weitere alternative Ausführung der erfindungsgemäß ausgebildeten Verbundscheibe 1.

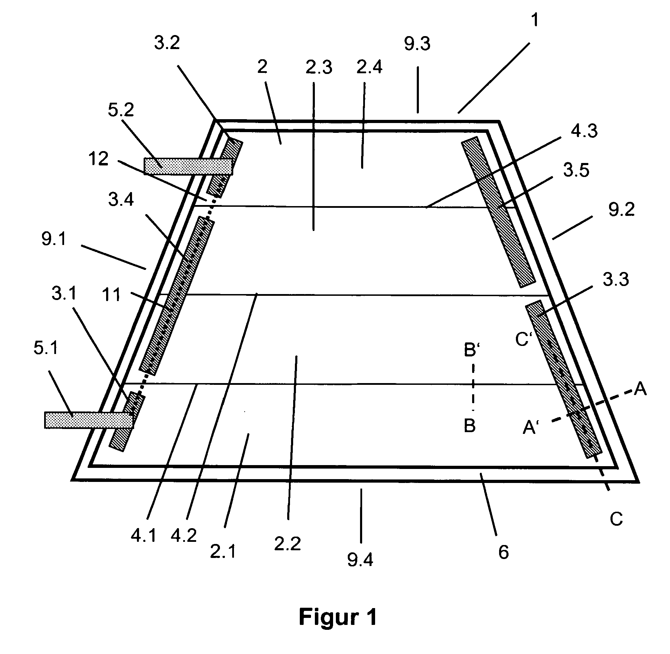

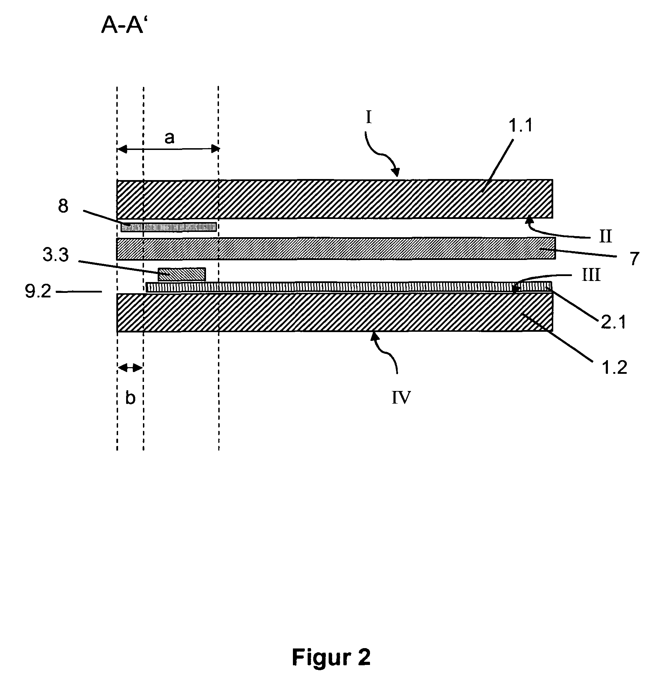

In den Figuren ist eine Ausführung der erfindungsgemäßen Verbundscheibe mit einer elektrisch heizbaren Beschichtung dargestellt, welche insgesamt mit der Bezugszahl 1 gekennzeichnet ist. Fig. 1 zeigt eine erfindungsgemäß ausgebildete Verbundscheibe 1 in Form einer Kraftfahrzeug-Windschutzscheibe in einer Draufsicht auf die Außenseite IV einer inneren Scheibe 1.2. Fig. 2 zeigt eine Querschnittszeichnung entlang der Linie A-A' aus Fig. 1.

Die einzelnen Scheiben 1.1 und 1.2 der Verbundscheibe 1 sind aus Floatglas und weisen Dicken von jeweils 2,1 mm auf. Die einzelnen Scheiben sind mit einer thermoplastischen Zwischenschicht miteinander verbunden. Die thermoplastische Zwischenschicht besteht aus einer Polyvinylbutyral (PVB)-Folie 7 mit einer Dicke von 0,76 mm. Im dargestellten Beispiel ist eine transparente, elektrisch leitfähige Beschichtung 2 auf die der thermoplastischen Zwischenschicht 7 zugewandten Seite III der inneren Scheibe 1.2 aufgebracht. Die elektrisch beheizbare Beschichtung kann gleichwohl auf die der thermoplastischen Zwischenschicht zugewandten Seite II der äußeren Scheibe 1.1, oder auf beiden Scheibeninnenseiten II und III aufgebracht werden. Die römische Zahl I bezeichnet die Außenseite der äußeren Scheibe 1.1, II die Innenseite der äußeren Scheibe 1.1, III die Innenseite der inneren Scheibe 1.2, und IV die Außenseite der inneren Scheibe 1.2.

Die transparente, elektrisch beheizbare Beschichtung 2 ist beispielsweise aus EP 0 847 965 B1 bekannt und besteht aus zwei Silberschichten, die jeweils zwischen mehreren Metall- und Metalloxidschichten eingebettet sind. Die genaue Schichtfolge ist in Tabelle 1 dargestellt.

Tabelle 1

| Material | Schichtdicke [nm] |
|---|---|
| Glas | |
| $Si_3N_4$ | 9 |
| ZnO | 21 |
| Ti | 1 |
| Ag | 9 |
| Ti | 1 |
| ZnO | 16 |
| $Si_3N_4$ | 57 |
| ZnO | 16 |
| Ti | 1 |
| Ag | 10 |
| Ti | 1 |

(fortgesetzt)

| Material | Schichtdicke [nm] |
|---|---|
| ZnO | 20 |
| $Si_3N_4$ | 18 |
| PVB | |

Das Schichtsystem hat einen Flächenwiderstand von etwa 3 Ohm/Quadrat bis 5 Ohm/Quadrat.

Die transparente, elektrisch leitfähige Beschichtung 2 erstreckt sich über die gesamte Fläche der Seite III der Scheibe 1.2, abzüglich eines umlaufenden rahmenförmigen entschichteten Bereichs mit einer Breite b von 8 mm. Mit b ist die Breite des durch den Abdeckdruck 8 abgedeckten Bereichs gekennzeichnet. Dieser dient der elektrischen Isolierung zwischen der spannungsführenden Beschichtung und der Fahrzeugkarosserie. Der entschichtete Bereich ist durch Verkleben mit der Zwischenschicht 7 hermetisch versiegelt.

Mehrere Sammelleiter 3.1, 3.2, 3.3, 3.4 und 3.5 befinden sich am äußeren Rand der Scheibe. Die Sammelleiter 3.1, 3.2, 3.3, 3.4 und 3.5 wurden mittels einer leitfähigen Silberpaste auf die transparente, elektrisch leitfähige Beschichtung 2 aufgedruckt und eingebrannt. Die Sammelleiter 3.1, 3.2, 3.3, 3.4 und 3.5 sind elektrisch leitend mit den darunter liegenden Bereichen der Beschichtung 2 verbunden. Ein erster Sammelleiter 3.1 ist mit einer ersten Zuleitung 5.1 elektrisch verbunden. Ein zweiter Sammelleiter 3.2 ist mit einer zweiten Zuleitung 5.2 elektrisch verbunden. Die Zuleitungen 5.1 und 5.2 bestehen aus verzinnten Kupferfolien mit einer Breite von 10 mm und einer Dicke von 0,3 mm. Die erste Zuleitung 5.1 ist mit dem ersten Sammelleiter 3.1 und die zweite Zuleitung 5.2 mit dem zweiten Sammelleiter 5.2 verlötet. Die anderen Sammelleiter 3.3 bis 3.5 sind mit keiner Zuleitung verbunden. Die beiden Zuleitungen 5.1., 5.2 sind zum Verbinden mit den beiden Polen einer Spannungsquelle zum Bereitstellen der Betriebsspannung vorgesehen.

Auf der äußeren Scheibe 1.1 ist am Rand der innen liegenden Seite II eine opake Farbschicht mit einer Breite a von 20 mm als Abdeckdruck 8 rahmenförmig aufgebracht. Der Abdeckdruck 8 verdeckt die Sicht auf den Klebestrang, mit dem die Verbundscheibe in die Fahrzeugkarosserie eingeklebt wird. Der Abdeckdruck 8 dient gleichzeitig als Schutz des Klebers vor UV-Strahlung und damit als Schutz vor vorzeitiger Alterung des Klebers. Des Weiteren werden die Sammelleiter 3.1, 3.2, 3.3, 3.4 und 3.5 und die Zuleitungen 5.1, 5.2 durch den Abdeckdruck 8 verdeckt. Mit a ist die Breite des durch den Abdeckdruck 8 abgedeckten Bereichs gekennzeichnet.

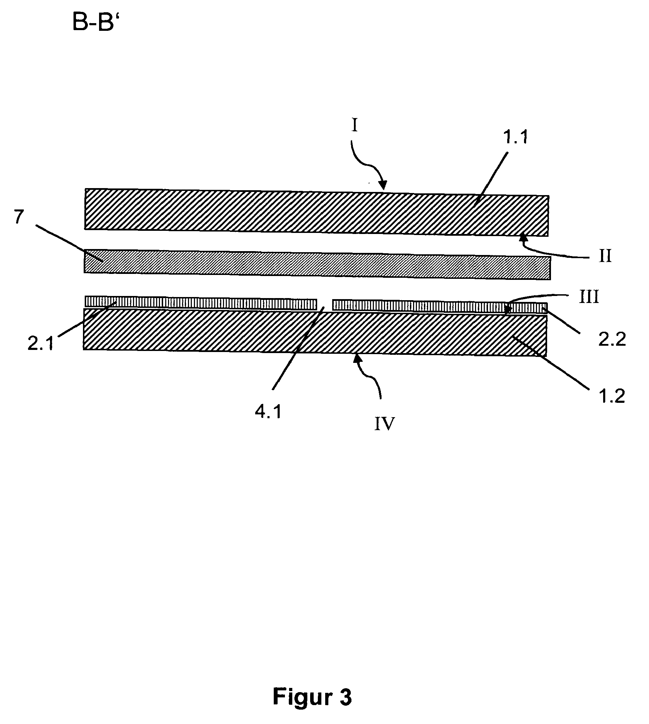

Fig. 3 zeigt eine Querschnittszeichnung entlang der Linie B-B' aus Fig. 1. Die transparente, elektrisch leitfähige Beschichtung 2 weist einen ersten Einschnitt 4.1 auf und ist in zwei vollständig voneinander getrennte Beschichtungsbereiche 2.1 und 2.2 (elektrisch) unterteilt. Zwei weitere Einschnitte 4.2, 4.3 unterteilen die transparente, elektrisch leitfähige Beschichtung 2 in insgesamt vier vollständig elektrisch voneinander isolierte Beschichtungsbereiche 2.1, 2.2, 2.3, 2.4. Die Einschnitte 4.1, 4.2 und 4.3 wurden mit einem fokussierten Laserstrahl in die Beschichtung 2 eingebracht.

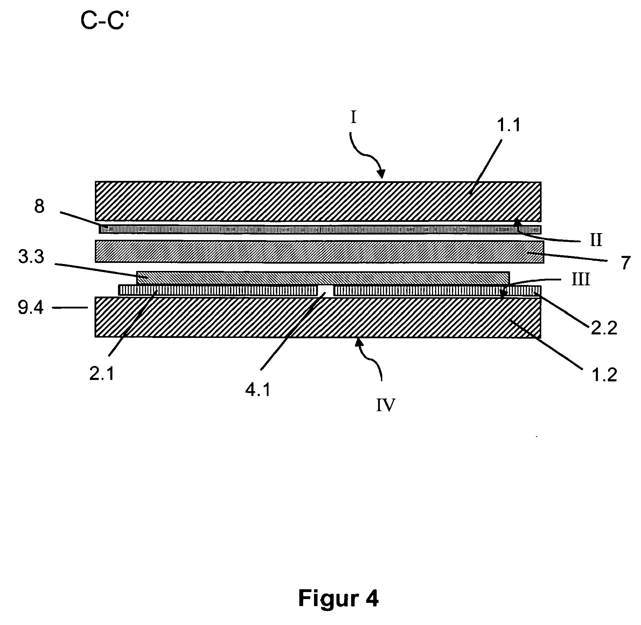

Fig. 4 zeigt die Verbindung der elektrisch voneinander isolierten Beschichtungsbereiche 2.1 und 2.2 durch einen dritten Sammelleiter 3.3 ohne Zuleitung. Ein vierter Sammelleiter 3.4. ohne Zuleitung verbindet die einander benachbarten Beschichtungsbereiche 2.2 und 2.3 elektrisch miteinander und der fünfte Sammelleiter 3.5 ohne Zuleitung die einander benachbarten Beschichtungsbereiche 2.3 und 2.4 miteinander. Die verschiedenen Beschichtungsbereiche 2.1-2.4 sind somit seriell elektrisch verschaltet.

Wird eine Betriebsspannung über die beiden Zuleitungen 5.1, 5.2 an den ersten Sammelleiter 3.1 bzw. zweiten Sammelleiter 3.2 angelegt, so fließt ein Strom durch die transparente, elektrische Beschichtung 2. Der Weg des elektrischen Stromes wird durch die Einschnitte 4.1, 4.2, 4.3 verlängert und passiert die Bereiche 2.1, 2.2, 2.3, 2.4 der Beschichtung 2 hintereinander.

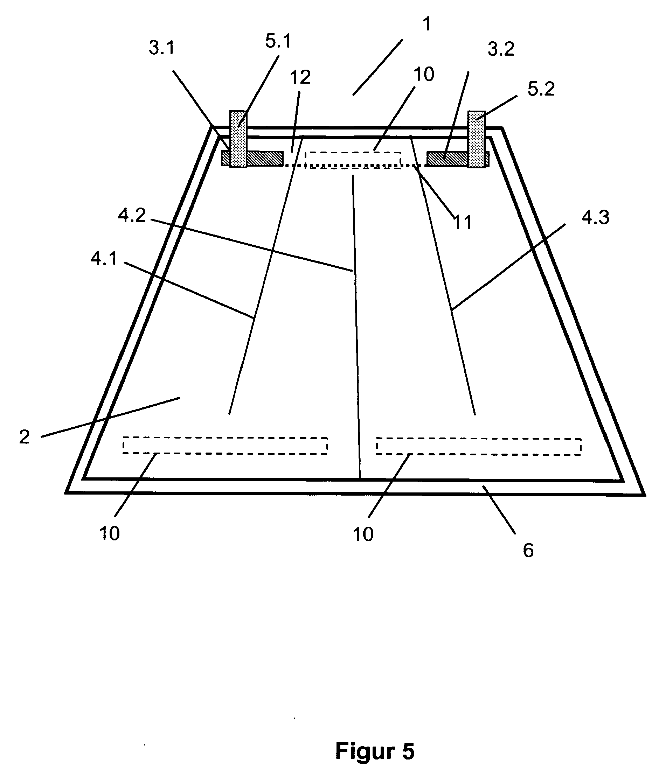

Fig. 5 zeigt eine Draufsicht auf eine alternative Ausführung der erfindungsgemäß ausgebildeten Verbundscheibe 1. Im Unterschied zur Variante von Fig. 1 ist in dieser Ausführungsform die transparente, elektrisch leitfähige Beschichtung (2) durch die Einschnitte 4.1, 4.2, 4.3 nicht in voneinander elektrisch isolierte Beschichtungsbereiche getrennt. Dennoch ist der Weg des elektrischen Stroms verlängert und der Widerstand der Beschichtung 2 zwischen den beiden Zuleitungen 5.1, 5.2 erhöht. In dieser Anordnung werden zwei Sammelleiter 2.1 und 2.2 benötigt, die sich an einem oberen Rand 9.3 der Verbundscheibe 1 befinden.

Zusätzlich können in den Bereichen 10 der transparenten, elektrisch leitfähigen Beschichtung 2, in denen die Stromrichtung umgekehrt wird, zusätzliche Sammelleiter aufgebracht werden. Die zusätzlichen Sammelleiter führen zu einer gleichmäßigeren Potentialverteilung und damit zu einer homogeneren Heizleistung sowie einer homogeneren Temperaturverteilung.

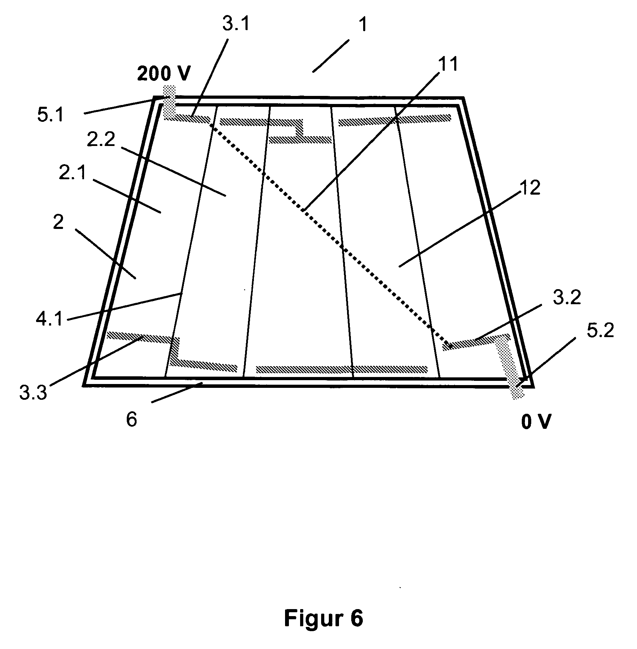

In Fig. 6 ist eine Draufsicht auf eine weitere alternative Ausführung der erfindungsgemäß ausgebildeten Verbundscheibe 1 dargestellt. Die transparente, elektrische leitfähige Beschichtung 2 weist einen Flächenwiderstand von 4 Ohm/Quadrat auf. Durch die Einschnitte 4.1, 4.2, 4.3 und 4.4 weist die Beschichtung 2 einen Gesamtwiderstand von etwa 64 Ohm auf. Nach Anlegen einer Betriebsspannung von 200 V betrug die Einschaltleistung etwa 621 W und der Einschaltstrom betrug etwa 3,1 A. Nach einer Zeit von 30 min. wurde eine thermographische Aufnahme der Verbundscheibe 1 erstellt. Die maximale Temperatur im zentralen Sichtfeld war etwa 71 °C.

In den Figuren 1, 5 und 6 ist jeweils ein kürzester geometrischer Abstand zwischen dem ersten Sammelleiter 3.1 und dem zweiten Sammelleiter 3.2, die jeweils mit einer Zuleitung verbunden sind und eine größte Potenzialdifferenz unter den Sammelleitern aufweisen, mit der Bezugszahl 11 schematisch dargestellt. In jeder Ausführung der erfindungsgemäßen Verbundscheibe ist der Beschichtungsabschnitt 12 der Beschichtung 2, welcher sich im Bereich des kürzesten geometrischen Abstands 11 zwischen dem ersten Sammelleiter 3.1 und dem zweiten Sammelleiter 3.2 befindet, durch eine Mehrzahl Einschnitte elektrisch unterbrochen. In Fig. 1 ist die Beschichtung 2 in direkter Linie zwischen den beiden Sammelelektroden 3.1, 3.2 durch drei Einschnitte 4.1, 4.2, 4.3 unterbrochen. In Fig. 5 ist die Beschichtung 2 in direkter Linie zwischen den beiden Sammelelektroden 3.1, 3.2 durch zwei Einschnitte 4.1, 4.2 unterbrochen. In Fig. 6 ist die Beschichtung 2 in direkter Linie zwischen den beiden Sammelelektroden 3.1, 3.2 durch vier Einschnitte 4.1-4.4 unterbrochen. Die Zahl Einschnitte ist jeweils in Abhängigkeit der Größe der vorgesehenen Betriebsspannung so gewählt, dass ein Spannungsabfall über einen einzelnen Einschnitt, durch den zwei einander benachbarte Beschichtungsbereiche elektrisch voneinander getrennt sind, geringer ist als eine Durchbruchsspannung des Einschnitts. Durch diese Maßnahme können die Einschnitte in besonders vorteilhafter Weise sehr schmal ausgebildet werden, so dass die optisch-ästhetische Erscheinung der Verbundscheibe nicht beeinträchtigt ist.

**Bezugszeichenliste**

| | |
|---|---|
| 1 | Verbundscheibe |
| 1.1 | äußere Scheibe |
| 1.2 | innere Scheibe |
| 2 | Beschichtung |
| 2.1 | erster Beschichtungsbereich |
| 2.2 | zweiter Beschichtungsbereich |
| 2.3 | dritter Beschichtungsbereich |
| 2.4 | vierter Beschichtungsbereich |
| 3.1 | erster Sammelleiter mit Zuleitung |
| 3.2 | zweiter Sammelleiter mit Zuleitung |
| 3.3 | erster Sammelleiter ohne Zuleitung |
| 3.4 | zweiter Sammelleiter ohne Zuleitung |
| 3.5 | dritter Sammelleiter ohne Zuleitung |
| 4.1 | erster Einschnitt |
| 4.2 | zweiter Einschnitt |
| 4.3 | dritter Einschnitt |
| 4.4 | vierter Einschnitt |
| 5.1 | erster Zuleitung |
| 5.2 | zweite Zuleitung |
| 6 | entschichteter Rand |
| 7 | Zwischenschicht |
| 8 | Abdeckdruck |
| 9.1 | erster vertikaler Rand |
| 9.3 | erster horizontaler Rand |
| 9.4 | zweiter horizontaler Rand |

10  Bereich für zusätzlichen Sammelleiter
11  kürzester geometrischer Abstand
12  Beschichtungsabschnitt

**Patentansprüche**

1.  Verbundscheibe (1) mit einer elektrisch beheizbaren Beschichtung (2), umfassend:

    - mindestens zwei Scheiben (1.1, 1.2),
    - eine Zwischenschicht (7), die die Scheiben (1.1, 1.2) miteinander verbindet,
    - mindestens eine transparente, elektrisch leitfähige Beschichtung (2) auf mindestens einer der Zwischenschicht (7) zugewandten Seite mindestens einer der Scheiben (1.1, 1.2) und
    - mindestens zwei Sammelleiter (3.1-3.5), die mit der transparenten, elektrisch leitfähigen Beschichtung (2) verbunden sind, wobei ein erster Sammelleiter (3.1) mit einer zur Verbindung mit dem einen Pol einer Spannungsquelle vorgesehenen ersten Zuleitung (5.1) und ein zweiter Sammelleiter (3.2) mit einer zur Verbindung mit dem anderen Pol der Spannungsquelle vorgesehenen zweiten Zuleitung (5.2) elektrisch verbunden ist,

    wobei die transparente, elektrisch leitfähige Beschichtung (2)

    - Silber enthält,
    - einen Flächenwiderstand von 1 Ohm/Quadrat bis 10 Ohm/Quadrat aufweist und
    - n Einschnitte (4.1-4.4), wobei n eine ganze Zahl $\geq 2$ ist, aufweist, welche die Beschichtung (2) in eine Mehrzahl Beschichtungsbereiche (2.1-2.4) unterteilen, wobei die Beschichtungsbereiche (2.1-2.4) elektrisch seriell miteinander verbunden sind, und wobei die Einschnitte (4.1-4.4) derart ausgebildet sind, dass der Widerstand der transparenten, elektrisch leitfähigen Beschichtung (2) bei einer von der Spannungsquelle bereitgestellten Betriebsspannung im Bereich von mehr als 100 V bis 400 V, insbesondere im Bereich von 280 V bis 400 V, zu einer Heizleistung von 300 W/m$^2$ bis 1000 W/m$^2$ führt, und wobei ein im Bereich eines kürzesten geometrischen Abstands (11) zwischen dem ersten Sammelleiter (3.1) und dem zweiten Sammelleiter (3.2) befindlicher Beschichtungsabschnitt (12) der elektrisch leitfähigen Beschichtung (2) durch eine Mehrzahl solcher Einschnitte (4.1-4.4) elektrisch unterbrochen ist, wobei die Zahl der Einschnitte (4.1-4.4) in Abhängigkeit der Größe der vorgesehenen Betriebsspannung so gewählt ist, dass ein Spannungsabfall über einen einzelnen Einschnitt (4.1-4.4), durch den zwei einander benachbarte Beschichtungsbereiche (2.1-2.4) elektrisch voneinander getrennt sind, geringer ist als eine Durchbruchsspannung des Einschnitts (4.1-4.4),

    wobei die Einschnitte (4.1-4.4) jeweils eine solche Breite haben, dass die vorgesehene Betriebsspannung größer als deren elektrische Durchbruchsspannung ist.

2.  Verbundscheibe nach Anspruch 1, bei welcher einander benachbarte Beschichtungsbereiche (2.1-2.4) durch einen jeweiligen Einschnitt (4) vollständig voneinander elektrisch isoliert und durch einen Sammelleiter (3.3-3.5) ohne Zuleitung (5.1, 5.2) elektrisch miteinander verbunden sind.

3.  Verbundscheibe nach Anspruch 1 oder 2, bei welcher einander benachbarte Beschichtungsbereiche (2.1-2.4) durch einen jeweiligen Einschnitt (4) abschnittsweise voneinander elektrisch isoliert, aber zusammenhängend ausgebildet sind.

4.  Verbundscheibe nach einem der Ansprüche 1 bis 3, bei welcher die Scheiben (1.1, 1.2) Glas, beispielsweise Flachglas, Floatglas, Quarzglas, Borosilikatglas, Kalk-Natron-Glas, oder Polymere, beispielsweise Polyethylen, Polypropylen, Polycarbonat, Polymethylmethacrylat und/oder Gemische davon enthalten.

5.  Verbundscheibe nach einem der Ansprüche 1 bis 4, bei welcher die transparente, elektrisch leitfähige Beschichtung (2) einen Flächenwiderstand von bevorzugt 3 Ohm/Quadrat bis 5 Ohm/Quadrat aufweist.

6.  Verbundscheibe nach einem der Ansprüche 1 bis 5, bei welcher sich die transparente, elektrisch leitfähige Beschichtung (2) auf mindestens 90% der Fläche einer Seite der Scheiben (1.1, 1.2) erstreckt.

7.  Verbundscheibe nach einem der Ansprüche 1 bis 6, bei welcher die Einschnitte (4.1-4.4) in die elektrisch leitfähige Beschichtung (2) durch Laserstrukturierung, mechanisches Abtragen oder durch chemisches oder physikalisches Ätzen eingebracht sind.

8.  Verbundscheibe nach einem der Ansprüche 1 bis 7, bei welcher die Sammelleiter (3.1-3.5) an in Einbaulage vertikalen Rändern (9.1, 9.2) der Verbundscheibe (1) angeordnet sind.

9.  Verbundscheibe nach einem der Ansprüche 1 bis 8, bei welcher der erste Sammelleiter (3.1) und der zweite Sammelleiter (3.2) jeweils am Rand einer Seite (9.1-9.4) der Verbundscheibe (1) angeordnet sind.

10. Verwendung der Verbundscheibe nach einem der Ansprüche 1 bis 9 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe.

11. Verwendung der Verbundscheibe nach einem der Ansprüche 1 bis 9 als Fahrzeugscheibe in Fortbewegungsmitteln mit einer Bordspannung im Bereich von mehr als 100 V bis 400 V.

12. Verwendung der Verbundscheibe nach einem der Ansprüche 1 bis 9 als Fahrzeugscheibe in Kraftfahrzeugen, die durch Umwandlung elektrischer Energie, bevorzugt aus Akkumulatoren, wiederaufladbaren Batterien, Brennstoffzellen oder verbrennungsmotorgetriebenen Generatoren, angetrieben werden, insbesondere in Elektrofahrzeugen.

13. Verwendung der Verbundscheibe nach einem der Ansprüche 1 bis 9 als Fahrzeugscheibe in Hybridelektrofahrzeugen, die neben der Umwandlung elektrischer Energie durch Umwandlung einer weiteren Energieform angetrieben werden.

**Claims**

1. Composite pane (1) with an electrically heatable coating (2), comprising:

   - at least two panes (1.1, 1.2),
   - an intermediate layer (7), which bonds the panes (1.1, 1.2) to one another,
   - at least one transparent, electrically conductive coating (2) on at least one side of at least one of the panes (1.1, 1.2) facing the intermediate layer (7), and
   - at least two bus bars (3.1-3.5), which are connected to the transparent, electrically conductive coating (2), wherein a first bus bar (3.1) is electrically connected to a first feed line (5.1) provided for connection to one pole of a voltage source and a second bus bar (3.2) is electrically connected to a second feed line (5.2) provided for connection to the other pole of the voltage source,

   wherein the transparent, electrically conductive coating (2)

   - contains silver,
   - has a sheet resistance of 1 ohm/square to 10 ohm/square, and
   - has n incisions (4.1-4.4), where n is an integer $\geq 2$, which divide the coating (2) into a plurality of coating regions (2.1-2.4), wherein the coating regions (2.1-2.4) are electrically connected to one another in series, and wherein the incisions (4.1-4.4) are implemented such that the resistance of the transparent, electrically conductive coating (2) results in a heating output of 300 W/m$^2$ to 1000 W/m$^2$ with an operating voltage in the range of more than 100 V to 400 V, in particular, in the range of 280 V to 400 V, and wherein a coating section (12) of the electrically conductive coating (2) situated in the region of a shortest geometric distance (11) between the first bus bar (3.1) and the second bus bar (3.2) is electrically interrupted by a plurality of such incisions (4.1-4.4), wherein the number of the incisions (4.1-4.4) is selected depending on the magnitude of the operating voltage provided such that a voltage drop over an individual incision (4.1-4.4), by which two adjacent coating regions (2.1-2.4) are electrically separated from one another, is less than a breakdown voltage of the incision (4.1-4.4), wherein the incisions (4.1-4.4) respectively have a width such that the operating voltage provided is greater than its electrical breakdown voltage.

2. Composite pane according to claim 1, wherein coating regions (2.1-2.4) adjacent each other are completely isolated from one another electrically by a respective incision (4) and are electrically connected to one another by a bus bar (3.3-3.5) without a feed line (5.1, 5.2).

3. Composite pane according to claim 1 or 2, wherein coating regions (2.1-2.4) adjacent each other are electrically isolated from one another in sections by a respective incision (4), but are implemented in a connected manner.

4. Composite pane according to one of claims 1 through 3, wherein the panes (1.1, 1.2) contain glass, for example, flat glass, float glass, quartz glass, borosilicate glass, sodalime glass, or polymers, for example, polyethylene, polypropylene, polycarbonate, polymethyl methacrylate, and/or mixtures thereof.

5. Composite pane according to one of claims 1 through 4, wherein the transparent, electrically conductive coating (2) has a sheet resistance of, preferably, 3 ohm/square to 5 ohm/square.

6. Composite pane according to one of claims 1 through 5, wherein the transparent, electrically conductive coating (2) extends over at least 90% of the surface area of one side of the panes (1.1, 1.2).

7. Composite pane according to one of claims 1 through 6, wherein the incisions (4.1-4.4) are introduced into the electrically conductive coating (2) by laser structuring, mechanical ablation, or by chemical or physical etching.

8. Composite pane according to one of claims 1 through 7, wherein the bus bars (3.1-3.5) are disposed on edges (9.1, 9.2) of the composite pane (1) that are vertical in the installed position.

9. Composite pane according to one of claims 1 through 8, wherein the first bus bar (3.1) and the second bus bar (3.2) are respectively disposed on the edge of one side (9.1-9.4) of the composite pane (1).

10. Use of the composite pane according to one of claims 1 through 9 in means of transportation for travel on land, in the air, or on the water, in particular, in motor vehicles, for example, as a windshield, rear window, side windows, and/or roof glass.

11. Use of the composite pane according to one of claims 1 through 9 as a motor vehicle pane in means of transportation with an on-board voltage in the range of more than 100 V to 400 V.

12. Use of the composite pane according to one of claims 1 through 9 as a motor vehicle pane in motor vehicles that are driven by conversion of electrical energy, preferably from accumulators, rechargeable batteries, fuel cells, or internal combustion engine driven generators, in particular, in electric vehicles.

13. Use of the composite pane according to one of claims 1 through 9 as a motor vehicle pane in hybrid electric vehicles that are driven by conversion of another energy form in addition to the conversion of electrical energy.

**Revendications**

1. Vitrage stratifié (1) avec un revêtement chauffé électriquement (2) comprenant:

    - au moins deux vitres (1.1, 1.2),
    - une couche intermédiaire (7), qui relie les vitres (1.1, 1.2) entre elles,
    - au moins un revêtement transparent, conducteur d'électricité (2) sur au moins une face tournée vers la couche intermédiaire (7) d'au moins une des vitres (1.1, 1.2) et
    - au moins deux conducteurs collectifs (3.1-3.5), qui sont reliés avec le revêtement transparent, conducteur d'électricité (2), où un premier conducteur collectif (3.1) est relié avec un premier câble (5.1) fourni pour se connecter avec un pôle d'une source de tension et un deuxième conducteur collectif (3.2) est relié électriquement avec un deuxième câble fourni pour se connecter à l'autre pôle de la source de tension (5.2),

où le revêtement transparent, conducteur d'électricité (2)

    - contient de l'argent,
    - présente une résistance de 1 Ohm/carré à 10 Ohm/ carré et
    - présente n incisions (4.1 à 4.4), où n est un numéro entier ≥2, qui subdivisent le revêtement (2) dans une pluralité de régions de revêtement (2.1 à 2.4), où les régions de revêtement (2.1 à 2.4) sont reliées électriquement en série entre elles et où les incisions (4.1 à 4.4) revêtement électriquement, et où les incisions sont configurées de telle manière, que la résistance du revêtement transparent, conducteur d'électricité (2) à une tension de service fournie par la source d'alimentation de l'ordre de plus de 100 V à 400 V, notamment dans le domaine de 280 V à 400 V, résulte en une puissance de 300 W/m$^2$ à 1000 W/m$^2$, et où une section de revêtement (12) se trouvant dans la zone d'un premier conducteur collectif d'une distance la plus courte géométrique (11) entre le premier conducteur collectif (3.1) et le deuxième conducteur collectif (3.2) de la couche électriquement conductrice (2) est interrompue électriquement par une pluralité de telles incisions (4.1 à 4.4), où le nombre des incisions (4.1 à 4.4) est choisi selon le montant de la tension de service prévue, de telle manière qu'une baisse de tension à travers une seule incision (4.1 à 4.4), par laquelle deux zones de revêtement (2.1 à 2.4) contiguës sont séparées électriquement, est inférieure à une tension de claquage de l'incision (4.1 à 4.4), où les incisions (4.1 à 4.4) ont chacune une telle largeur, qui la tension de fonctionnement prévue est supérieure à leur tension de claquage électrique.

2. Vitrage stratifié selon la revendication 1, où des zones de revêtement (2.1 à 2.4) contiguës sont respectivement complètement isolées électriquement par une incision (4) et sont reliées électriquement par un conducteur collectif (3,3 à 3,5) sans câble (5.1, 5.2).

3. Vitrage stratifié selon la revendication 1 ou 2, où des zones de revêtement (2.1 à 2.4) contiguës sont respectivement isolées électriquement par sections par une incision (4), mais sont configurées contiguës.

4. Vitrage stratifié selon l'une des revendications 1 à 3, où les vitres (1.1, 1.2) contiennent du verre, tels que le verre plat, le verre flotté, le verre de quartz, le verre borosilicate, le verre à chaux sodée ou des polymères, tels que le polyéthylène, le polypropylène, le polycarbonate, le polyméthacrylate de méthyle et/ou les mélanges de ceux-ci.

5. Vitrage stratifié selon l'une des revendications 1 à 4, où le revêtement transparent, conducteur d'électricité (2) présente une résistance de surface de préférence de 3 Ohm/carré à 5 Ohms/carré.

6. Vitrage stratifié selon l'une des revendications 1 à 5, où le revêtement transparent, conducteur d'électricité (2) s'étend sur au moins 90% de la surface d'une face des vitres (1.1, 1.2).

7. Vitrage stratifié selon l'une des revendications 1 à 6, où les incisions (4.1 à 4.4) sont introduites dans la couche électriquement conductrice (2) par structuration laser, enlèvement mécanique ou par gravage chimique ou physique.

8. Vitrage stratifié selon l'une des revendications 1 à 7, où les conducteurs collectifs (3.1-3.5) sont disposés dans des bords verticaux (9.1, 9.2) du vitrage stratifié (1) en position de montage.

9. Vitrage stratifié selon l'une des revendications 1 à 8, où le premier conducteur collectif (3.1) et le deuxième conducteur collectif (3.2) sont disposés chacun en bordure d'une face (9,1-9.4) du vitrage stratifié (1).

10. Utilisation du vitrage stratifié selon l'une des revendications 1 à 9 dans les moyens de transport pour la circulation sur la terre, dans l'air ou sur l'eau, en particulier dans les véhicules automobiles, par exemple, comme pare-brise, la lunette arrière, vitre latérale et/ou toit en verre.

11. Utilisation du vitrage stratifié selon l'une des revendications 1 à 9 comme vitre de véhicules dans les moyens de transport ayant une tension de l'ordre de plus de 100 V à 400 V.

12. Utilisation du vitrage stratifié selon l'une des revendications 1 à 9 comme vitre de véhicules dans les automobiles, propulsés par la conversion de l'énergie électrique de préférence de piles, accumulateurs rechargeables, des cellules à combustible ou des générateurs à moteur à combustion interne, en particulier dans les véhicules électriques.

13. Utilisation du vitrage stratifié selon l'une des revendications 1 à 9 comme vitre de véhicules dans les véhicules électriques hybrides, qui sont alimentés par la conversion d'une autre forme d'énergie en plus de la conversion d'énergie électrique.

**Figur 1**

A-A'

**Figur 2**

B-B'

**Figur 3**

C-C'

**Figur 4**

**Figur 5**

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10352464 A1
- DE 10333618 B3
- WO 105533 A1
- DE 102004029164 A1
- EP 0847965 B1
- DE 69731268 T2
- DE 202008017611 U1

- EP 0025755 B1
- DE 4235063 A1
- DE 202004019286 U1
- DE 9313394 U1
- EP 2200097 A1
- EP 2139049 A1